Europäisches Patentamt

European Patent Office

Office européen des brevets

(11) Publication number: **0 494 506 A1**

# EUROPEAN PATENT APPLICATION

(21) Application number: **91311286.8**

(22) Date of filing: **04.12.91**

(51) Int. Cl.5: **C09K 3/18**, C09K 5/00

(30) Priority: **05.01.91 GB 9100217**

(43) Date of publication of application:
**15.07.92 Bulletin 92/29**

(84) Designated Contracting States:
**AT BE CH DE DK FR GB IT LI NL SE**

(71) Applicant: **BP Chemicals Limited**
**Belgrave House 76 Buckingham Palace Road**
**London, SW1W 0SU(GB)**

(72) Inventor: **Smith, Roy Paul**
**BP Chemicals Limited**
**Saltend, Hedon HU12 8DS(GB)**

(74) Representative: **Krishnan, Suryanarayana**
**Kalyana et al**
**BP INTERNATIONAL LIMITED Patents &**
**Agreements Division Chertsey Road**
**Sunbury-on-Thames Middlesex TW16**
**7LN(GB)**

(54) **Deicing compositions.**

(57) This invention relates to a deicing composition comprising an aqueous solution of (a) an alkali metal acetate and/or an alkali metal formate, (b) an alkali metal phosphate and (c) a corrosion inhibitor selected from the group of sucrose, mannose, an alkali metal benzoate and an alkali metal tetraborate. The composition has a pH value in the range of 9.5-11.2. The compositions are environmentally friendly.

EP 0 494 506 A1

The present invention relates to deicing compositions which have negligible corrosivity.

It is well known that during winter snow and ice cause serious hazard to the movement of traffic in the highways, runways and taxiways. Also, deicing of aircraft, especially the main wings thereof, is of great importance since the formation of ice on the wings can effectively alter the profile of the wing thereby creating non-laminar flows which in turn increases the pressure over the wing and reduces lift. It is a major exercise for local authorities to minimise any delays or accidents caused by such adverse conditions and by providing a maintenance service for these areas which will allow safe movement of traffic.

The most common and effective deicing chemical is sodium chloride, especially for temperatures down to about -6°C. Although sodium chloride is readily available as common salt and is economic to a point, it presents serious problems of corrosion to structural steel and road vehicles, and environmentally has adverse effects on vegetation and drainage systems.

In order to minimise these corrosive effects more recently formulations containing urea have been used as a deicing agent. However, urea also has the following disadvantages:

(a) urea decomposes into ammonia which is toxic to fish even in low concentration;

(b) any water abstracted for potable supply may give rise to treatment problems especially in respect of chlorination of the abstracted water if ammonia is present;

(c) urea can act as a fertiliser thereby promoting the growth of weeds and algae in rivers and waterways;

(d) urea is ineffective at temperatures below -11.5°C for melting ice;

(e) urea has, in solution above or below its eutectic point concentration, a freezing point higher than -11.5°C;

(f) granules (or prills) of urea are easily blown off dry runways; and

(g) urea has been found to be corrosive to metals and alloys used in aircraft manufacture e.g. steel and magnesium alloys.

In order to mitigate the above problems, glycol based formulations have been propsed as deicing agents. In particular, monoethylene-, diethylene- and triethylene-glycols have been favoured. Of these monoethylene glycol exerts a high biological oxygen demand (BOD) whereas the other two glycols are resistant to biodegradation and hence present problems of pollution and contamination of rivers and waterways. Our prior published EP-A-375214 describes a formulation in which a nitrite is used as the corrosion inhibitor. For some uses, the presence of nitrites or other nitrogeneous compounds in the formulation may be unacceptable.

It has now been found that these problems of corrosion and environmental pollution can be significantly reduced by using a formulation substantially free from any of the aforementioned chemicals.

Accordingly, the present invention is a deicing composition comprising an aqueous solution of

a) an alkali metal acetate and/or an alkali metal formate,

b) an alkali metal phosphate and

c) a corrosion inhibitor selected from sucrose, mannose, an alkali metal benzoate and an alkali metal tetraborate,

said composition having a pH value in the range of 9.5 - 11.2.

In the compositions of the present invention the acetate and/or formate used is that of sodium or potassium and is preferably potassium acetate and/or formate.

The amount of the acetate and/or formate used in the composition is suitably 45-60% w/w, and is preferably 50-53% w/w.

Again, the phosphate present in the composition is suitably sodium or potassium phosphate and is preferably potassium phosphate. The phosphate is suitably present in the composition in an amount of 0.1-0.4% w/w, preferably from 0.15-0.25% w/w.

The corrosion inhibitor is suitably selected from sucrose, mannose, sodium benzoate or potassium benzoate, disodium tetraborate and dipotassium tetraborate. The precise amount of the corrosion inhibitor used for optimum performance may depend upon the type of inhibitor used and the nature of the substrate being treated with the deicing composition. For instance, a substrate of magnesium alloy may require a higher concentration of the inhibitor such as e.g. sodium benzoate than a cadmium plated steel substrate. Generally speaking, the corrosion inhibitor is suitably present in the composition in an amount of 0.2-0.6% w/w, preferably from 0.25-0.5% w/w.

The remainder of the composition to make up the 100% is water in which the above mentioned components are dissolved. Water is usually present in an amount from 45-55% w/w.

The compositions of the present invention optionally contain ethylenediaminetetraacetic acid. The amount of ethylenediaminetetraacetic acid (EDTA) if present, is suitably 0.2-0.7% w/w and is preferably from 0.5 - 0.6% w/w. The water content of the compositions is then adjusted accordingly.

Depending upon the concentration of the individual components in the composition, the pH of the

2

composition may vary. It is, however, essential to adjust the pH of the composition prior to use to a value from 9.5 to 11.2 by adding appropriate amounts of either an alkali metal hydroxide or acetic acid. Thus when no EDTA is present, the pH of the compositions is preferably 10.8 to 11.2. Where EDTA is present the pH of the composition is preferably from 9.5 to 10.

The compositions of the present invention have a eutectic temperature below -40°C.

The present invention is further illustrated with reference to the followign Examples:

Examples:

A typical deicing composition of the present invention has the following components in the proportions shown:

| Potassium acetate | 50% w/w |
| Potassium phosphate | 0.2% w/w |
| Corrosion inhibitor | 0.25-0.5% w/w |
| Water | Remainder |
| pH of composition | 10.8-11.2 |

These compositions were tested according to the total immersion corrosion tests specified in AMS 1426A (ASTM F 483 and ARP 1511) using coupons (surface area 28.2 cm$^2$) of magnesium alloy (AZ31B) and cadmium steel as substrates which show the greatest sensitivity to corrosion.

The following corrosion inhibitors were tested in the concentrations shown in the above composition:

```
Manrose                    0.5% w/w

Sucrose                    0.5% w/w

Sodium benzoate:

     (for Cd Steel)        0.25% w/w

     (for Mg alloy)        0.5% w/w

     (for both)            0.35% w/w

Disodium tetraborate       0.5% w/w
```

The procedure for testing used was as follows:

The coupons were initially immersed in 1,1,1-trichloroethane at 66°C and using a swab of cotton wool. The coupons were then immersed several times in a beaker containing methylethyl ketone. The excess solvent was then shaken off and the coupons dried in an oven at 33.7°C for 15 minutes, then cooled and weighed.

The weighed coupons were placed in a beaker and an amount of the deicing solution poured on the coupon (110 ml for Cd steel and 219 ml for Mg alloy) left immersed for a duration (24 hr at 35°C for Cd steel and 168 hr (7 days) at 35°C for Mg alloy).

Thereafter the coupons were rinsed in water (cold water for Cd steel and hot water for Mg alloy) whilst brusing the coupon surface with a stiff nylon brush. The coupons were then rinsed with distilled water followed by acetone and then dried in a warm oven. The dried coupons were cooled and reweighed.

The weight change was calculated and converted to units in terms of mg/cm$^2$ per 24 hours as follows:
For cadmium steels:

<u>Wt change (mg)</u>

28.2

For magnesium alloys:

<u>Wt change (mg)</u>

7 x 28.2

The results are tabulated in Tables 1-5 below:

The compositions of the present invention have the following advantages over conventional deicing compositions.

(1) They are less corrosive to metals and alloys used in aircraft manufacture than compositions containing urea and meet the stringent standards of corrosivity especially with regard to cadmium plated steels, magnesium alloys, aluminium alloys and copper;

(2) They are unique in that they are based on acetate salts as the major component;

(3) They have lower biological oxygen demand than monoethylene glycol;

(4) They are more easily biodegraded than diethylene glycol or triethylene glycol;

(5) They have the quickest low temperature ice melting properties when compared with urea and glycol based products.

(6) They are non-hazardous to the environment, as tested under the OECD Guidelines No. 203 and EEC Directive 67/548 Annex VCI as

In the following Tables 1-5, the following notations have been used:

CONC -     Solution as prepared with ingredients shown in the heading of each Table.

DIL -        1:1 solution of CONC as above in deionised water.

## TABLE 1

### TOTAL IMMERSION CORROSION ACCORDING TO AMS 1426A

<u>TEST PANEL</u>: <u>MAGNESIUM ALLOY</u>, DICHROMATE TREATED AS IN AMS 2475

168 HOURS IN THE SOLUTION AT 35°C

<u>THE WEIGHT CHANGE LIMIT IS</u> : 0.2 mg/cm$^2$ per 24 hours

THE TEST PANELS WERE IMMERSED IN THE FOLLOWING SOLUTION:

- POTASSIUM ACETATE 50% w/w
- 0.20% w/w POTASSIUM PHOSPHATE
- 0.25% w/w INHIBITOR

| INHIBITOR | | INITIAL WEIGHT(g) | FINAL WEIGHT(g) | WEIGHT CHANGE(mg) | WEIGHT CHANGE (mg/cm$^2$/24 hours) |
|---|---|---|---|---|---|
| SUCROSE | CONC. | 3.6032 | 3.6010 | -2.2 | -0.011 |
| | DIL.. | 3.6738 | 3.6518 | -22.0 | -0.111 |
| MANNOSE | CONC. | 3.6887 | 3.6915 | -2.8 | -0.015 |
| | DIL.. | 3.6687 | 3.6562 | -12.5 | -0.063 |
| DI-SODIUM TETRABORATE | CONC. | 3.6886 | 3.6888 | +0.2 | +0.001 |
| | DIL.. | 3.7036 | 3.6724 | -31.2 | -0.158 |
| SODIUM BENZOATE | CONC. | 3.6032 | 3.6010 | -2.2 | -0.011 |
| | DIL.. | 3.6736 | 3.6427 | -30.9 | -0.156 |

## TABLE 2

TOTAL IMMERSION CORROSION ACCORDING TO AMS 1426A

TEST PANEL: MAGNESIUM ALLOY, DICHROMATE TREATED AS IN AMS 2475

168 HOURS IN THE SOLUTION AT 35°C

THE WEIGHT CHANGE LIMIT IS: 0.2 mg/cm$^2$ per 24 hours

THE TEST PANELS WERE IMMERSED IN THE FOLLOWING SOLUTION:

- POTASSIUM ACETATE 50% w/w
- 0.2% w/w POTASSIUM PHOSPHATE
- 0.5% w/w INHIBITOR

| INHIBITOR | | INITIAL WEIGHT(g) | FINAL WEIGHT(g) | WEIGHT CHANGE(mg) | WEIGHT CHANGE (mg/cm$^2$/24 hours) |
|---|---|---|---|---|---|
| SUCROSE | CONC. | 3.7058 | 3.7035 | -2.3 | -0.012 |
| | DIL.. | 3.6815 | 3.6617 | -19.8 | -0.100 |
| MANNOSE | CONC. | 3.6887 | 3.6881 | -0.6 | -0.003 |
| | DIL.. | 3.6763 | 3.6764 | +0.1 | -0.001 |
| DI-SODIUM TETRABORATE | CONC. | 3.6908 | 3.7104 | +19.6 | +0.099 |
| | DIL.. | 3.6780 | 3.6814 | +3.4 | +0.017 |
| SODIUM BENZOATE | CONC. | 3.6777 | 3.6786 | +0.9 | +0.005 |
| | DIL.. | 3.6686 | 3.6627 | -5.9 | -0.030 |

TABLE 3

TOTAL IMMERSION CORROSION ACCORDING TO AMS 1426A

TEST PANEL: CADMIUM PLATED STEEL

24 HOURS AT 35°C

THE WEIGHT CHANGE LIMIT IS : 0.3 mg/cm$^2$ per 24 hours

THE TEST PANELS WERE IMMERSED IN THE FOLLOWING SOLUTION:

- POTASSIUM ACETATE 50% w/w

- 0.20% w/w POTASSIUM PHOSPHATE

- 0.25% w/w INHIBITOR

| INHIBITOR | | INITIAL WEIGHT(g) | FINAL WEIGHT(g) | WEIGHT CHANGE(mg) | WEIGHT CHANGE (mg/cm$^2$/24 hours) |
|---|---|---|---|---|---|
| SUCROSE | CONC. | 15.5265 | 15.5185 | -8.3 | -0.294 |
| | DIL.. | 15.6374 | 15.6361 | -1.3 | -0.046 |
| MANNOSE | CONC. | 15.5678 | 15.5623 | -5.5 | -0.195 |
| | DIL.. | 15.2443 | 15.2415 | -2.8 | -0.099 |
| DI-SODIUM TETRABORATE | CONC. | 15.3897 | 15.3832 | -6.5 | -0.230 |
| | DIL.. | 15.4519 | 15.4476 | -4.3 | -0.152 |
| SODIUM BENZOATE | CONC. | 15.2325 | 15.2253 | -7.2 | -0.255 |
| | DIL.. | 15.6531 | 15.6516 | -1.5 | -0.053 |

7

## TABLE 4

### TOTAL IMMERSION CORROSION ACCORDING TO AMS 1426A

TEST PANEL:  CADMIUM PLATED STEEL

24 HOURS AT 35°C

THE WEIGHT CHANGE LIMIT IS: 0.3 mg/cm$^2$ per 24 hours

THE TEST PANELS WERE IMMERSED IN THE FOLLOWING SOLUTION:

- POTASSIUM ACETATE 50% w/w
- 0.2% w/w POTASSIUM PHOSPHATE
- 0.5% w/w INHIBITOR

| INHIBITOR | | INITIAL WEIGHT(g) | FINAL WEIGHT(g) | WEIGHT CHANGE(mg) | WEIGHT CHANGE (mg/cm$^2$/24 hours) |
|---|---|---|---|---|---|
| SUCROSE | CONC. | 15.6508 | 15.6471 | -3.7 | -0.131 |
| | DIL.. | 15.5027 | 15.5016 | -1.1 | -0.039 |
| MANNOSE | CONC. | 14.9508 | 15.9499 | -0.9 | -0.032 |
| | DIL.. | 15.4518 | 15.4502 | -1.6 | -0.057 |
| DI-SODIUM TETRABORATE | CONC. | 15.6995 | 15.6969 | -2.6 | -0.092 |
| | DIL.. | 15.6531 | 15.6498 | -3.3 | -0.117 |
| SODIUM BENZOATE | CONC. | 15.6177 | 15.6080 | -9.7 | -0.344 |
| | DIL.. | 15.7432 | 15.7423 | -0.9 | -0.032 |

## TABLE 5

### TOTAL IMMERSION CORROSION ACCORDING TO AMS 1426A

THE TEST PANELS WERE IMMERSED IN THE FOLLOWING SOLUTION:

- POTASSIUM ACETATE 50% w/w
- 0.20% w/w POTASSIUM PHOSPHATE
- 0.35% w/w SODIUM BENZOATE

| TEST PIECES | | INITIAL WEIGHT(g) | FINAL WEIGHT(g) | WEIGHT CHANGE(mg) | WEIGHT CHANGE ($mg/cm^2$/24 hours) |
|---|---|---|---|---|---|
| CADMIUM PLATED STEEL | CONC. | 15.5527 | 15.5482 | -4.5 | -0.160 |
| | DIL.. | 15.5456 | 15.5449 | -0.7 | -0.025 |
| MAGNESIUM ALLOY | CONC. | 3.6771 | 3.6807 | +3.6 | +0.018 |
| | DIL.. | 3.6983 | 3.6248 | -73.5 | -0.372 |

The deicing formulations of the present invention were used in deicing tests in the laboratory as follows:

General Method:-

5g samples of the appropriate deicer (at -18°C) were put on ice sheets at -18°C and allowed to remain for 30 minutes at that temperature.

The ice sheets were then inverted for 10 minutes to drain off the melt water (temperature maintained at -18°C).

The amount of ice melted by each deicer was calculated from weight difference and the value used to express the final result as weight of ice melted per gram of deicer.

| Formulation | Ice melting value at -18°C for 30 minutes (g ice melted/g deicer) |
|---|---|
| 1. Potassium acetate 50%w/w<br>Potassium phosphate 0.2%w/w<br>Sucrose 0.5%w/w<br>Water to 100% | 0.85 |
| 2. Potassium acetate 50%w/w<br>Potassium phosphate 0.2%w/w<br>Disodium tetraborate 0.5%w/w<br>Water to 100% | 0.83 |
| 3. Potassium acetate 50%w/w<br>Potassium phosphate 0.2%w/w<br>Sodium benzoate 0.35%w/w<br>Water to 100% | 0.80 |
| 4. Potassium acetate 50%w/w<br>Potassium phosphate 0.2%w/w<br>Mannose 0.5%w/w<br>Water to 100 | 0.80 |
| 5. Clearway 1<br>Potassium acetate 50%w/w<br>Potassium phosphate 0.2%w/w<br>Sodium nitrite 0.4%w/w<br>Water to 100% | 0.90 |

## Claims

1. A deicing composition comprising an aqueous solution of
   a) an alkali metal acetate and/or an alkali metal formate,
   b) an alkali metal phosphate and
   c) a corrosion inhibitor selected from the group of sucrose, mannose, an alkali metal benzoate and an alkali metal tetraborate,
   said composition having a pH value in the range of 9.5-11.2.

2. A deicing composition according to Claim 1 wherein component (a) is present in an amount from 45-60%w/w.

3. A deicing composition according to Claim 1 or 2 wherein component (a) is potassium acetate and/or formate.

4. A deicing composition according to any one of the preceding Claims wherein component (b) is potassium phosphate.

5. A deicing composition according to any one of the preceding Claims wherein component (b) is present in an amount from 0.1-0.4%w/w.

6. A deicing composition according to any one of the preceding Claims wherein the corrosion inhibitor (c) is present in an amount from 0.2-0.6%w/w.

7. A deicing composition according to any one of the preceding Claims wherein the pH thereof is from 10.8-11.2.

8. A deicing composition according to any one of the preceding Claims 1-6 wherein the composition optionally contains ethylenediaminetetracetic acid.

**9.** A deicing composition according to Claim 8 wherein the pH thereof is from 9.5-10.

**10.** A deicing composition according to any one of the preceding Claims wherein said composition has a eutectic point below -40°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 375 214 (BP CHEMICALS)<br>* page 2, line 30 - line 45; claims 1-5 *<br>--- | 1-5,7,9 | C09K3/18<br>C09K5/00 |
| Y | US-A-4 728 393 (PEEL)<br>* abstract; claim 1; table 3 *<br>--- | 1-5,7,9 | |
| A | US-A-4 254 166 (GLANVILLE)<br>* abstract; claims 1,2,10 *<br>--- | 1-10 | |
| A | US-A-2 233 185 (SMITH)<br>* page 3, line 7 - line 18; claims 1-4; example 3 *<br>----- | 1-10 | |
| | | | **TECHNICAL FIELDS SEARCHED (Int. Cl.5)**<br><br>C09K |

The present search report has been drawn up for all claims

| Place of search | Date of completion of the search | Examiner |
|---|---|---|
| THE HAGUE | 18 FEBRUARY 1992 | NICOLAS H.J.F. |